# EUROPEAN PATENT APPLICATION

(11) **EP 4 417 664 A1**
(43) Date of publication of application: **21.08.2024**
(21) Application number: 22892495.7
(22) Date of filing: 14.10.2022
(51) Int. Cl.: C09K 3/18, D06M 15/507

(54) **POROUS PARTICLES**

(30) Priority: 15.11.2021 JP 2021185703
(71) Applicant: Daikin Industries, Ltd., Osaka 530-0001 (JP); OSAKA UNIVERSITY, Suita-shi Osaka 565-0871 (JP)
(72) Inventor: AKUTA, Ryo, Osaka-shi, Osaka 530-8323 (JP); HIGASHI, Masahiro, Osaka-shi, Osaka 530-8323 (JP); KISHIKAWA, Yosuke, Osaka-shi, Osaka 530-8323 (JP); HSU, Yu-I, Suita-shi, Osaka 565-0871 (JP); UYAMA, Hiroshi, Suita-shi, Osaka 565-0871 (JP)
(74) Representative: Hoffmann Eitle
(86) International application number: PCT/JP2022/038440
(87) International publication number: WO 2023/084995

(57) **Abstract**

Provided is a novel water repellent agent in which a biodegradable polyester is used. In the water repellent agent, porous particles having the biodegradable polyester as a main component are contained.

## Description

### Technical Field

The present disclosure relates to a water-repellent agent, particularly to a water-repellent agent using a biodegradable material.

### Background Art

Development of water-repellent agents capable of imparting water-repellency to various substrates such as textile products and paper products has been progressed. On the other hand, development of biodegradable materials also has been progressed in order to contribute to realization of the sustainable society.

Patent Literature 1 discloses, as a method for producing porous microparticles of a biodegradable polyester-based resin by an industrially inexpensive process without using a special apparatus, a method for producing the porous microparticles, whose average particle size is in the range of 1 µm to 500 µm and whose surfaces have pores of 50 nm to 5 µm, the method involving adding a poor solvent to a solution in which the biodegradable polyester-based resin is dissolved in a 1,3-dioxolane, and thereafter cooling the resultant solution at a rate of 0.5°C/min or higher down to 20°C or lower.

Patent Literature 2 discloses, as a method for producing polylactic acid-based resin porous microparticles small in particle size and high in oil absorption, suitable for cosmetic applications, a method for producing the polylactic acid-based resin microparticles, the method involving dissolving a polylactic acid-based resin and a polymer different from the polylactic acid-based resin in an ether-based organic solvent, applying a shear force thereto to form an emulsion, and thereafter bringing the resultant into contact with a poor solvent of the polylactic acid-based resin.

### Citation List

### Patent Literature

Patent Literature 1: JP 2006-282772 A
Patent Literature 2: WO2012/105140

### Summary of Invention

### Technical Problem

In both of the above-mentioned literatures, no studies are made on the water-repellency of biodegradable polyester particles and their applications to water-repellent agents. Further, the influence of the porosity of the biodegradable polyester particles on the water-repellency cannot be anticipated by persons skilled in the art. The present disclosure has an object to provide a novel water-repellent agent using a biodegradable polyester.

### Solution to Problem

One embodiment in the present disclosure is as follows.
[Item 1] A water-repellent agent comprising a porous particle containing a biodegradable polyester as a main component.
[Item 2] The water-repellent agent according to Item 1, wherein the biodegradable polyester is an aliphatic polyester.
[Item 3] The water-repellent agent according to Item 1 or 2, wherein the biodegradable polyester is at least one resin selected from the group consisting of polylactic acid, polyalkylene succinate, polyhydroxyalkanoate and polylactone.
[Item 4] The water-repellent agent according to any one of Items 1 to 3, wherein the porous particle has a particle size of 0.1 um to 500 um.
[Item 5] The water-repellent agent according to any one of Items 1 to 4, comprising an aqueous medium.
[Item 6] A method for producing a water-repellent agent comprising a porous particle containing a biodegradable polyester as a main component, the method comprising: a dissolution step of dissolving the biodegradable polyester in a good solvent thereof to obtain a good solvent solution;
   a poor solvent addition step of adding a poor solvent of the biodegradable polyester to the good solvent solution to obtain a poor solvent-containing liquid; and
   a porous particle formation step of forming the porous particle in the poor solvent-containing liquid.
[Item 7] The method for producing a water-repellent agent according to Item 6, wherein the good solvent comprises an ether solvent and a ketone solvent.
[Item 8] The method for producing a water-repellent agent according to Item 7, wherein the weight ratio of the ether solvent/the ketone solvent is 0.01 to 0.3.
[Item 9] The method for producing a water-repellent agent according to any one of Items 6 to 8, wherein in the dissolution step, the biodegradable polyester is dissolved under heating in the good solvent, and
   in the porous particle formation step, the poor solvent-containing liquid is cooled down to 20°C or lower.
[Item 10] The method for producing a water-repellent agent according to any one of Items 6 to 9, comprising a solvent post-addition-holding step of, after the porous particle formation step, adding a post-addition solvent selected from polar solvents having a Rohrschneider's polarity parameter in the range of 3.5 to 11 to the poor solvent-containing liquid, and holding the resultant.
[Item 11] A textile product, having porous particles containing a biodegradable polyester as a main component adhered on the textile product.

### Advantageous Effects of Invention

The water-repellent agent in the present disclosure can impart water-repellency to various substrates. Further, the water-repellent agent in the present disclosure, since having biodegradability, has a low environmental impact, and can contribute to the realization of the sustainable society.

### Brief Description of Drawings

[FIG. 1] is a micrograph of porous particles in Example 1.
[FIG. 2] is a micrograph of porous particles in Example 2.
[FIG. 3] is a micrograph of porous particles in Example 3.
[FIG. 4] is a micrograph of porous particles in Example 4.
[FIG. 5] is a micrograph of porous particles in Example 5.
[FIG. 6] is a micrograph of porous particles in Example 6.
[FIG. 7] is a micrograph of porous particles in Example 7.
[FIG. 8] is a micrograph of porous particles in Comparative Example 1.

### Description of Embodiments

### <Water-repellent agent>

A water-repellent agent in the present disclosure contains porous particles containing a biodegradable polyester (referred to also simply as "porous particle"). The water-repellent agent may further contain other components (for example, liquid media, binder resins, dispersants, surfactants and other additives).

### [Porous particle]

The porous particle in the present disclosure, in the case of being used as a water-repellent agent, adheres on a substrate and functions as an active component exhibiting the water-repellency of the substrate.

### (Biodegradable polyester)

The porous particle in the present disclosure contains the biodegradable polyester. The biodegradable polyester may be a thermoplastic resin or a thermosetting resin. The biodegradable polyester may be aliphatic or aromatic one, but is, from the viewpoint of developing good water-repellency and biodegradability, preferably aliphatic.

Examples of the biodegradable polyester include polylactic acid, polyalkylene succinate, polyhydroxyalkanoate and polylactone.

The polylactic acid has at least a repeating unit derived from lactic acids (L-lactic acid, D-lactic acid, L-lactide, D-lactide and the like) being a raw material component.

The polylactic acid may contain 20% by weight or more, 40% by weight or more, 60% by weight or more, 80% by weight or more or 90% by weight or more of the repeating unit derived from the raw material component. Examples of repeating units derived from components other than the raw material component in the polylactic acid include a polyol unit (or a succinic acid unit), a hydroxyalkanoic acid and a lactone unit.

The polyalkylene succinate has, at least, a repeating unit derived from alkane polyols (for example, diols and triols, particularly diols) being a raw material component, and a repeating unit derived from succinic acid being a raw material component. Examples of the alkane polyols include ethylene glycol, 1,3-propanediol, 1,2-propanediol, 1,3-butanediol, 2-methyl-propanediol, 1,4-butanediol, neopentylglycol, pentamethylene glycol, hexamethylene glycol, octamethylene glycol, decamethylene glycol, dodecamethylene glycol, 1,4-cyclohexanediol, 1,4-cyclohexanedimethanol, diethylene glycol, dipropylene glycol, triethylene glycol, tetraethylene glycol, pentaethylene glycol and polyethylene glycols of 1,000 or less in molecular weight. The number of carbon atoms of the alkane polyols may be 2 or more, 3 or more, 4 or more, 5 or more, 6 or more, 7 or more, or 8 or more, and is preferably 3 or more. The number of carbon atoms of the hydroxyalkanoic acid may be 15 or less, 12 or less, 10 or less, 8 or less, 6 or less, or 4 or less, and is preferably 10 or less and especially preferably 6 or less. These may be used singly or may be used concurrently in two or more kinds.

The polyalkylene succinate may contain 20% by weight or more, 40% by weight or more, 60% by weight or more, 80% by weight or more or 90% by weight or more of the repeating units derived from the raw material components. Examples of repeating units derived from components other than the raw material components include a lactic acid unit, a hydroxyalkanoic acid unit and a lactone unit.

The polyhydroxyalkanoate has at least a repeating unit derived from hydroxyalkanoic acids being a raw material component. The polyhydroxyalkanoate may be an artificially synthesized one or may be a one biosynthesized by microbes. Examples of the hydroxyalkanoic acids include glycolic acid, 3-hydroxybutyrate, 3-hydroxypropionate, 3-hydroxyvalerate, 3-hydroxyhexanoate, 3-hydroxyheptanoate, 3-hydroxyoctanoate, 3-hydroxynanoate, 3-hydroxydecanoate, 3-hydroxytetradecanoate, 3-hydroxyhexadecanoate, 3-hydroxyoctadecanoate, 4-hydroxybutyrate, 4-hydroxyvalerate, 5-hydroxyvalerate and 6-hydroxyhexanoate. The number of carbon atoms of the hydroxyalkanoic acids may be 2 or more, 3 or more, 4 or more, 5 or more, 6 or more, 7 or more, or 8 or more, and is preferably 3 or more. The number of carbon atoms of the hydroxyalkanoic acids may be 15 or less, 12 or less, 10 or less, 8 or less, 6 or less, or 4 or less, and is preferably 10 or less and especially preferably 6 or less. These may be used singly or may be used concurrently in two or more kinds.

The polyhydroxyalkanoate may contain 20% by weight or more, 40% by weight or more, 60% by weight or more, 80% by weight or more or 90% by weight or more of the repeating unit derived from the raw material component. Examples of repeating units derived from components other than the raw material component in the polyhydroxyalkanoate include a lactic acid unit, a polyol unit (or succinic acid unit) and a lactone unit.

The polylactone has at least a repeating unit derived from lactone being a raw material component. Examples of the lactone include ε-caprolactone, methylated ε-caprolactone, β-propiolactone, γ-butyrolactone, δ-valerolactone and enantholactone. The number of carbon atoms of the lactone may be 3 or more, 4 or more, 5 or more, 6 or more, 7 or more, or 8 or more, and is preferably 3 or more. The number of carbon atoms of the lactone may be 15 or less, 12 or less, 10 or less, 8 or less, 6 or less, or 4 or less, and is preferably 10 or less and especially preferably 6 or less. These may be used singly or may be used concurrently in two or more kinds.

The polylactone may contain 20% by weight or more, 40% by weight or more, 60% by weight or more, 80% by weight or more or 90% by weight or more of the repeating unit derived from the raw material component. Examples of repeating units derived from components other than the raw material component in the polylactone include a lactic acid unit, a polyol unit (or succinic acid unit) and a hydroxyalkanoic acid unit.

The weight average molecular weight of the biodegradable polyester may be 5,000 or more, 10,000 or more, 25,000 or more, 50,000 or more, 100,000 or more, or 200,000 or more, and is preferably 50,000 or more. The weight average molecular weight of the biodegradable polyester may be 1,000,000 or less, 750,000 or less, 500,000 or less, 250,000 or less, 150,000 or less, 100,000 or less, or 50,000 or less, and is preferably 500,000 or less.

The porous particle contains the biodegradable polyester as a main component. The amount of the biodegradable polyester may be, in the porous particle, 50% by weight or more, 60% by weight or more, 70% by weight or more, 80% by weight or more, 90% by weight or more, or 95% by weight or more, and is preferably 75% by weight or more. The amount of the biodegradable polyester may be, in the porous particle, 100% by weight or less, 98% by weight or less, 95% by weight or less, 92% by weight or less, or 90% by weight or less.

### (Other components)

The porous particle may contain other components other than the biodegradable polyester. Examples of the other components include resin components other than the biodegradable polyester, fillers, dispersants, antioxidants, rust preventives, antistatic agents, wettability improvers, flowability modifiers, water-repellent agents, lubricants, colorants, crosslinking agents, deodorant light decomposers, biodegradability promoters, biodegradability controlling agents, thermal stabilizers, various improvers and plasticizers, and these may be blended, as required, according to use purposes.

### (Shape and the like of the porous particle)

The shape of the porous particle in the present disclosure may be globular or non-globular. The globular particle can include nearly globular particles such as globular particles having voids or protrusions on their surface, oval particles and rugged globular particles. The non-globular particles can include particles of a polyhedron shape and particles of an indeterminate crushed shape. The porous particle may have porosity due to having a large number of pores, or may have porosity due to having a large number of protrusions (sea urchin-shaped particle).

### (Average particle size of the porous particle)

The average particle size of the porous particles may be 0.1 µm or larger, 0.5 µm or larger, 1 µm or larger, 5 um or larger, 10 um or larger, 15 µm or larger, 20 µm or larger, 25 µm or larger, 50 µm or larger, or 100 µm or larger. The average particle size of the porous particles may be 500 µm or smaller, 250 µm or smaller, 100 µm or smaller, 50 µm or smaller, or 25 µm or smaller. Due to being in the above range, good water-repellency can be developed. The average particle size can be measured by a microscope (optical microscope or scanning electron microscope). Specifically, by using a microscope, any position of a substrate having adhered particles is observed at an optional magnification from above. The particle sizes of all particles present in the visual field are measured, and the measurement is repeated by shifting the visual fields to measure particle sizes of 100 or more particles, and the average value thereof is taken as the average particle size. In a micrograph, in the case where the shape of a particle is not a complete circle, that is, is elliptic, the average value of a major axis length and a minor axis length may be taken as a particle size thereof.

### (Amount of the porous particles)

The amount of the porous particles may be, with respect to the water-repellent agent, 0.01% by weight or more, 0.05% by weight or more, 0.1% by weight or more, 1% by weight or more, 3% by weight or more, 5% by weight or more, or 10% by weight or more. The amount of the porous particles may be, with respect to the water-repellent agent, 75% by weight or less, 50% by weight or less, 30% by weight or less, 15% by weight or less, or 10% by weight or less.

### [Liquid medium]

The water-repellent agent may contain a liquid medium, and in particular, contains an aqueous medium. The liquid medium may be water singly, an organic solvent singly, or a mixture of water and an organic solvent.

In the case where the liquid medium is the mixture of water and an organic solvent, the amount of the organic solvent may be, with respect to the liquid medium, 5% by weight or more, 15% by weight or more, 30% by weight or more, 50% by weight or more, 75% by weight or more, or 90% by weight or more. The amount of the organic solvent may be, with respect to the liquid medium, 90% by weight or less, 50% by weight or less, 30% by weight or less, or 10% by weight or less.

The amount of the liquid medium may be, with respect to the composition, 30% by weight or more, 50% by weight or more, 60% by weight or more, 75% by weight or more, or 90% by weight or more. The amount of the liquid medium may be, with respect to the composition, 95% by weight or less, 75% by weight or less, or 50% by weight or less.

### [Binder]

The water-repellent agent may contain a binder. The binder functions as a binder to bind the porous particle to a substrate. The binder may be a resin or a compound, and is preferably a water-repellent resin or compound. The water-repellent resin or compound functions also as an active component exhibiting water-repellency. Examples of the binder resin are acrylic polymers, urethane polymers, polyolefin, polyester, polyether, polyamide, polyimide, polystyrene and silicone polymers. Examples of the binder compound are blocked isocyanates, epoxy group-containing compounds and carbodiimide-containing compounds. The amount of the binder may be, with respect to 100 parts by weight of the porous particles, 0.1 to 20 parts by weight, for example, 0.1 to 10 parts by weight.

### [Dispersant]

The water-repellent agent may contain a dispersant in order to enhance the dispersibility of the porous particles, or may contain no dispersant. The dispersant includes various hydrophobic or hydrophilic dispersants including: polystyrene derivatives such as polyhydroxystyrene, polystyrenesulfonic acid, vinylphenol-(meth)acrylate ester copolymers, styrene-(meth)acrylate ester copolymers and styrene-vinylphenol-(meth)acrylate ester copolymers; poly(meth)acrylic acid derivatives such as poly(meth)acrylic acid, poly(meth)acrylamide, polyacrylonitrile, polyethyl (meth)acrylate and polybutyl (meth)acrylate; polyvinyl alkyl ether derivatives such as polymethyl vinyl ether, polyethyl vinyl ether, polybutyl vinyl ether and polyisobutyl vinyl ether; cellulose derivatives such as cellulose, methylcellulose, cellulose acetate, cellulose nitrate, hydroxymethylcellulose, hydroxyethylcellulose, hydroxypropylcellulose and carboxymethylcellulose; polyvinyl acetate derivatives such as polyvinyl alcohol, polyvinyl butyral, polyvinyl formal and polyvinyl acetate; nitrogen-containing polymer derivatives such as polyvinylpyridine, polyvinylpyrrolidone, polyethyleneimine and poly-2-methyl-2-oxazoline; and poly-halogenated vinyl derivatives such as polyvinyl chloride and polyvinylidene chloride. These may be used singly, or may be used concurrently in two or more kinds. The amount of the dispersant may be, with respect to 100 parts by weight of the porous particles, 0.1 to 20 parts by weight, for example, 0.1 to 10 parts by weight.

### [Surfactant]

The water-repellent agent may contain a surfactant (emulsifier) in order to stabilize a dispersion, or may contain no surfactant (emulsifier). In particular, in the case where a treatment target is a textile product, it is preferable that in the water-repellent agent, the surfactant contains an ionic surfactant. The ionic surfactant may be one or more selected from cationic surfactants, anionic surfactants and amphoteric surfactants. The surfactant may also be a combination of a nonionic surfactant and an ionic surfactant.

Each of nonionic surfactants, cationic surfactants and amphoteric surfactants may be one kind or a combination of two kinds or more. The amount of the surfactant may be, with respect to 100 parts by weight of the porous particles, 15 parts by weight or less, 10 parts by weight or less, 7.5 parts by mass or less, 5 parts by weight or less, or 2.5 parts by weight or less. Addition of a surfactant generally improves the stability of water dispersions and the penetrativity thereof to fabrics, but reduces the water-repellent performance. It is preferable that the kinds and the amounts of surfactants are selected so as to simultaneously satisfy these effects. Since the porous particle of the present disclosure exhibits good water-repellency and dispersibility (particularly water dispersibility), the amount of the surfactant can be reduced.

### [Other additives]

The water-repellent agent may contain other additives. Examples of the other additives are water-repellent agents other than the porous particle, oil-repellent agents, drying rate adjusters, cross-linking agents, film formation aids, compatibilizers, antifreezing agents, viscosity adjusters, ultraviolet absorbents, antioxidants, pH adjusters, antifoaming agents, texture modifiers, slippage modifiers, antistatic agents, hydrophilizing agents, antibacterial agents, antiseptics, insect repellents, fragrant agents and flame retarders. The amount of the other additives each may be, with respect to 100 parts by weight of the porous particles, 0.1 part by weight or more, 0.5 part by weight or more, 1 part by weight or more, 2.5 parts by weight or more, 5 parts by weight or more, or 10 parts by weight or more. The amount of the other additives each may be, with respect to 100 parts by weight of the porous particles, 100 parts by weight or less, 50 parts by weight or less, 25 parts by weight or less, 10 parts by weight or less, or 5 parts by weight or less.

### <Method for producing the water-repellent agent>

A method for producing the water-repellent agent containing porous particles containing a biodegradable polyester in the present disclosure includes:
a dissolution step of dissolving the biodegradable polyester in a good solvent thereof to obtain a good solvent solution;
a poor solvent addition step of adding a poor solvent of the biodegradable polyester to the good solvent solution to obtain a poor solvent-containing liquid; and a porous particle formation step of forming the porous particles in the poor solvent-containing solution.

### [Dissolution step]

In the dissolution step, a biodegradable polyester is dissolved in a good solvent thereof to obtain a good solvent solution. The good solution refers to a solvent capable of dissolving the biodegradable polyester in a large amount, and specifically may be a solvent in which the solubility at 25°C (weight ratio of a solute to 100 g of a solvent) of the biodegradable polyester is 20% by weight or more, 40% by weight or more, 60% by weight or more, or 80% by weight or more.

A method of dissolving the biodegradable polyester in the good solvent is not especially limited as long as the biodegradable polyester can be dissolved in the solvent, but dissolution under heating is preferable. The dissolution may be carried out under stirring using a homogenizer or the like. The temperature in the dissolution may be 30°C or higher, 40°C or higher, 50°C or higher, 60°C or higher, 70°C or higher, or 80°C or higher, and may be not higher than the boiling point (reflux temperature of the solvent) of the solvent, for example, 200°C or lower, 150°C or lower, or 100°C or lower.

The amount of the good solvent may be, with respect to 100 mg of the biodegradable polyester, 0.25 mL or more, 0.5 mL or more, 0.75 mL or more, 1 mL or more, or 2.5 mL or more. The amount of the good solvent may be, with respect to 100 mg of the biodegradable polyester, 25 mL or less, 20 mL or less, 15 mL or less, 10 mL or less, 7.500 mL or less, 5 mL or less, or 2.5 mL or less.

The good solvent may contain at least one selected from ether solvents and ketone solvents, and preferably contains both of an ether solvent and a ketone solvent. Due to that the good solvent contains these solvents, water-repellent particles can well be formed.

The ether solvent may be aromatic or aliphatic, and is preferably aliphatic. The ether solvent may be cyclic or acyclic, and is preferably cyclic. The ether solvent may be a monoether, which has only one ether bond, or a polyether, which has two or more ether bonds. The ether solvent may have a hydroxyl group, or may have no hydroxyl group.

The number of carbon atoms of the ether solvent may be 2 or more, 3 or more, 4 or more, or 5 or more. The number of carbon atoms of the ether solvent may be 12 or less, 10 or less, 8 or less, 6 or less, or 4 or less.

The boiling point of the ether solvent may be 50°C or higher, 70°C or higher, 90°C or higher, or 100°C or higher. The boiling point of the ether solvent may be 250°C or lower, 230°C or lower, 190°C or lower, 160°C or lower, or 130°C or lower.

Specific examples of the ether solvent include tetrahydrofuran, methyltetrahydrofuran, 1,3-dioxane, 1,4-dioxane, 1,3-dioxolane, diethyl ether, dipropyl ether, diisopropyl ether, dibutyl ether, dipentyl ether, dihexyl ether, diheptyl ether, dioctyl ether, t-butyl methyl ether, cyclopentyl methyl ether, 1,2-dimethoxyethane, diethylene glycol dimethyl ether, anisole, diphenyl ether, ethylene glycol monomethyl ether, ethylene glycol monoethyl ether, ethylene glycol monopropyl ether, ethylene glycol monoisopropyl ether, ethylene glycol monobutyl ether, ethylene glycol monoisobutyl ether, ethylene glycol mono-t-butyl ether, diethylene glycol monomethyl ether, diethylene glycol monoethyl ether, diethylene glycol monopropyl ether, diethylene glycol monoisopropyl ether, diethylene glycol monobutyl ether, diethylene glycol monoisobutyl ether, diethylene glycol mono-t-butyl ether, propylene glycol monopropyl ether and propylene glycol monomethyl ether.

The amount of the ether solvent may be, in the whole good solvent, 2.5% by weight or more, 5% by weight or more, 7.5% by weight or more, or 10% by weight or more. The amount of the ether solvent may be, in the whole good solvent, 70% by weight or less, 50% by weight or less, 30% by weight or less, 20% by weight or less, or 10% by weight or less, and is preferably 30% by weight or less. Due to that the amount is in the above range, water-repellent particles can well be formed.

The ketone solvent may be a cyclic one or an acyclic one. The ketone solvent may be an aromatic one or an aliphatic one, and is preferably an aliphatic one.

The number of carbon atoms of the ketone solvent may be 2 or more, 3 or more, or 4 or more. The number of carbon atoms of the ketone solvent may be 12 or less, 10 or less, 8 or less, 6 or less, or 4 or less.

The boiling point of the ketone solvent may be 30°C or higher, 50°C or higher, 70°C or higher, or 90°C or higher. The boiling point of the ketone solvent may be 200°C or lower, 175°C or lower, 150°C or lower, or 125°C or lower.

Specific examples of the ketone solvent include acetone, 2-butanone (methyl ethyl ketone), methyl propyl ketone, methyl isopropyl ketone, methyl butyl ketone, methyl isobutyl ketone, diethyl ketone, cyclopentanone and cyclohexanone.

The amount of the ketone solvent may be, in the whole good solvent, 20% by weight or more, 40% by weight or more, 60% by weight or more, or 80% by weight or more, and is preferably 50% by weight or more. The amount of the ketone solvent may be, in the whole good solvent, 100% by weight or less, 97.5% by weight or less, 95% by weight or less, 92.5% by weight or less, 90% by weight or less, 87.5% by weight or less, or 85% by weight or less.

In the good solvent, the weight ratio of the ether solvent/the ketone solvent may be 0.01 or higher, 0.03 or higher, 0.05 or higher, 0.07 or higher, or 0.1 or higher. In the good solvent, the weight ratio of the ether solvent/the ketone solvent may be 0.3 or lower, 0.2 or lower, or 0.1 or lower. Due to that the weight ratio is in the above range, water-repellent particles can well be formed.

Other solvents other than the ether solvent and the ketone solvent can suitably be selected according to the solubility of a polyester resin, but examples thereof include nitrile solvents such as acetonitrile, propionitrile and benzonitrile; chlorinated aliphatic hydrocarbon solvents such as dichloromethane, chloroform and 1,2-dichloroethane; ester solvents such as methyl acetate, ethyl acetate, propyl acetate, isopropyl acetate, butyl acetate, isobutyl acetate, t-butyl acetate, amyl acetate, isoamyl acetate, hexyl acetate, methyl propionate, ethyl propionate, propyl propionate and isopropyl propionate; and aprotic polar solvents such as dimethyl sulfoxide, sulfolane, N,N-dimethylformamide, N,N-dimethylacetamide, N,N-dimethylpropionamide, N-methylpyrrolidone, γ-butyrolactone, dimethyl carbonate, diethyl carbonate, ethylene carbonate, propylene carbonate, 1,3-dimethyl-2-imidazolidinone, and 1,3-dimethyl-3,4,5,6-tetrahydro-2(1H)-pyridinone.

The amount of the other solvents may be, in the whole good solvent, 2.5% by weight or more, 5% by weight or more, or 7.5% by weight or more. The amount of the other solvents may be, in the whole good solvent, 30% by weight or less, 15% by weight or less, 10% by weight or less, 5% by weight or less, or 2.5% by weight or less. The good solvent may contain no other solvents.

### [Poor solvent addition step]

In the poor solvent addition step, a poor solvent of the biodegradable polyester is added to the good solvent-containing liquid obtained in the above to thereby obtain a poor solvent-containing liquid. The poor solvent refers to a solvent capable of dissolving almost no biodegradable polyester, and specifically may be a solvent in which the solubility at 25°C (weight ratio of a solute to 100 g of a solvent) of the biodegradable polyester is 15% by weight or less, 10% by weight or less, 5% by weight or less, 1% by weight or less, 0.5% by weight or less, or 0.1% by weight or less.

When the poor solvent is added, the addition of the poor solvent may be carried out in the state that the good solvent solution is heated. The addition of the poor solvent may be carried out under stirring using a homogenizer or the like. The temperature at the addition of the poor solvent may be 30°C or higher, 40°C or higher, 50°C or higher, 60°C or higher, 70°C or higher, or 80°C or higher, and may be not higher than the boiling point temperature (reflux temperature of the solvent) of the solvent, for example, 200°C or lower, 150°C or lower, or 100°C or lower. The temperature at the addition of the poor solvent may also be the same as the temperature in the dissolution step.

The amount of the poor solvent may be, with respect to the amount of the good solvent, 0.5% by weight or more, 1% by weight or more, 2% by weight or more, 2.5% by weight or more, 5% by weight or more, or 10% by weight or more. The amount of the poor solvent may be, with respect to the amount of the good solvent, 100% by weight or less, 75% by weight or less, 50% by weight or less, 40% by weight or less, 30% by weight or less, 20% by weight or less, 10% by weight or less, or 5% by weight or less.

The poor solvent can suitably be selected according to the solubility of the biodegradable polyester, but examples thereof include at least one solvent selected from the group consisting of aliphatic hydrocarbon solvents such as pentane, hexane, heptane, octane, nonane, n-decane, n-dodecane, n-tridecane, cyclohexane and cyclopentane; aromatic hydrocarbon solvents such as benzene, toluene and xylene; alcohol solvents such as methanol, ethanol, 1-propanol and 2-propanol; and water. From the viewpoint of efficiently granulating the biodegradable polyester, the poor solvent is preferably an aliphatic hydrocarbon solvent, an aromatic hydrocarbon solvent, an alcohol solvent or water, more preferably an alcohol solvent or water, and most preferably water. The poor solvent may have compatibility (for example, miscibility) with the good solvent.

### [Porous particle formation step]

In the porous particle formation step, the porous particles are formed in the poor solvent-containing liquid.

The porous particles may possibly be formed in the stage that the poor solvent is added to the good solvent, but it is preferable that the formation of the porous particles is promoted by cooling the heated poor solvent-containing liquid.

The cooling temperature may be 30°C or lower, 25°C or lower, 20°C or lower, 15°C or lower, 10°C or lower, 5°C or less, or 3°C or lower, and is preferably 20°C or lower. The lower limit of the cooling temperature is not lower than the solidifying temperature of the solvent, and is usually -10°C or higher, particularly -5°C or higher. The cooling can be achieved by exposing the poor solvent-containing liquid to a cooling temperature atmosphere. For example, the cooling may be achieved by dipping a container containing the poor solvent-containing liquid in ice water. The cooling temperature is allowed to be adjusted depending on the desired particle size and the like. The cooling may be carried out under stirring.

The cooling time may be 1 min or longer, 5 min or longer, 15 min or longer, 30 min or longer, 45 min or longer, or 1 hour or longer. The cooling time may be 24 hours or shorter, 12 hours or shorter, 6 hours or shorter, or 3 hours or shorter. The cooling time is allowed to be adjusted depending on the desired particle size, the cooling temperature and the like.

In the case where the heated poor solvent-containing liquid is cooled to the above cooling temperature, the cooling rate may be 0.5°C/min or higher, 1°C/min or higher, 3°C/min or higher, or 5°C/min or higher, and may be 10°C/min or lower, 7.5°C/min or lower, 5.5°C/min or lower, or 3.5°C/min or lower.

### [Solvent post-addition-holding step]

It is preferable that the production method of the present disclosure includes a solvent post-addition-holding step. In the solvent post-addition-holding step, after the porous particle formation step, a post-addition solvent is added to the poor solvent-containing liquid, and the resultant is held. By providing the solvent post-addition-holding step, the disintegration property of the porous particles is enhanced and the dispersibility is improved. By providing the solvent post-addition-holding step, the interfacial state of the porous particles is varied, which can suitably contribute to the porosity and the water-repellency of the porous particles.

The post-addition solvent refers to a solvent to be added after the porous particle formation step. The amount of the post-addition solvent may be, with respect to the total amount of the good solvent and the poor solvent, 1% by weight or more, 5% by weight or more, 10% by weight or more, 20% by weight or more, 30% by weight or more, 40% by weight or more, or 50% by weight or more. The amount of the post-addition solvent may be, with respect to the total amount of the good solvent and the poor solvent, 200% by weight or less, 150% by weight or less, 100% by weight or less, 75% by weight or less, or 50% by weight or less.

In the present disclosure, it is preferable that the post-addition solvent is selected from polar solvents having a Rohrschneider's polarity parameter in the range of 3.5 to 11. The post-addition solvent may be used singly, or may be used concurrently in two or more kinds. The Rohrschneider's polarity parameter is a parameter indicating the polarity of the solvent, determined by calculation in consideration of the proton donatability, the proton acceptability and the contribution of the dipole. For the Rohrschneider's polarity parameter, reference can be made to the following literatures. For reference, for example, there can be used values described in Table 6.1 in pp. 248-250 of the following literature (1) (Properties of solvents for use in liquid chromatography).
Literature (1): Snyder, Lloyd R., Joseph J. Kirkland, and John W. Dolan. Introduction to modern liquid chromatography. John Wiley & Sons, 2011. 2nd Edition
Literature (2): L. Rohrschneider, Anal. Chem., 45, 1241 (1973)
Literature (3): L. R. Snyder, J. Chromatogr., 92, 223 (1974); J. Chromatogr. Sci., 16, 223 (1978)

The Rohrschneider's polarity parameter of the post-addition solvent may be 3.5 or higher, 4 or higher, 5 or higher, 6 or higher, or 7 or higher. The Rohrschneider's polarity parameter of the post-addition solvent may be 11 or lower, 10 or lower, 9 or lower, 8 or lower, or 7 or lower.

The post-addition solvent to be used is allowed to be the good solvent or the poor solvent of the biodegradable polyester interpreted in the above-mentioned dissolution step, provided that the Rohrschneider's polarity parameter is in the above range, and the above-mentioned interpretation about the good solvent or the poor solvent of the biodegradable polyester is adopted as the interpretation of the post-addition solvent.

It is preferable that the post-addition solvent contains a ketone solvent or an alcohol solvent. The ketone solvent or the alcohol solvent contained in the post-addition solvent is allowed to be the same as the ketone solvent or the alcohol solvent exemplified in the above-mentioned interpretation about the good solvent or the poor solvent of the biodegradable polyester. The amount of the ketone solvent or the alcohol solvent in the post-addition solvent may be, in the whole post-addition solvent, 30% by weight or more, 40% by weight or more, 50% by weight or more, 60% by weight or more, 70% by weight or more, 80% by weight or more, 90% by weight or more, or 100% by weight or more, and is preferably 50% by weight or more and more preferably 70% by weight or more. Due to that the post-addition solvent contains the ketone solvent or the alcohol solvent in the above range, water-repellent particles can well be formed.

Specific examples of the post-addition solvent include isopropyl alcohol, tetrahydrofuran, n-propanol, chloroform, ethanol, ethyl acetate, methyl ethyl ketone, dioxane, acetone, methanol and acetonitrile, but the post-addition solvent is not limited to these.

It is preferable that after the addition of the post-addition solvent, a post-addition solvent-containing liquid is held in a certain temperature range for a certain time. It is preferable that during the holding, the post-addition solvent-containing liquid is stirred.

The holding temperature may be 0°C or higher, 5°C or higher, 10°C or higher, 20°C or higher, or 30°C or higher, and is preferably 5°C or higher. The holding temperature may be 80°C or lower, 70°C or lower, 60°C or lower, or 50°C or lower, and is preferably 40°C or lower. The holding temperature may also be room temperature.

The holding time may be 1 min or longer, 5 min or longer, 15 min or longer, 30 min or longer, 45 min or longer, or 1 hour or longer. The holding time may be 24 hours or shorter, 12 hours or shorter, 6 hours or shorter, 3 hours or shorter, 2 hours or shorter, or 1 hour or shorter. The holding time can be adjusted depending on the holding temperature, the desired particle size and the like.

### [Crushing step]

The production method of the present disclosure may include a crushing step. Although the porous particles obtained in the porous particle formation step may be used as they were as the water-repellent agent, alternatively, in the crushing step, the porous particles may be subjected to a crushing treatment (for example, wet-type crushing treatment or dry-type crushing treatment) to make the particle size of the porous particles small. The wet-type crushing treatment includes wet balls mill crushing, wet beads mill crushing, wet shearing stress crushing and wet media agitating crushing, but is not limited to these means. The dry-type crushing treatment includes jet mill crushing, balls mill crushing, cross jet mill crushing, dry beads mill crushing and twin-impeller counter-air flow dry crushing, but is not limited to these means.

### [Water-repellent agent formation step]

The production method of the present disclosure may include a water-repellent agent formation step. The porous particles may be used singly as the water-repellent agent, or in the water-repellent agent formation step, the water-repellent agent may be formed by combining other components. Alternatively, the water-repellent agent may be produced by adding, to the poor solvent-containing solution obtained in the production of the porous particles, as required, the above-mentioned other components of the water-repellent agent. Alternatively, the water-repellent agent may be produced by recovering the porous particles from the poor solvent-containing solution obtained in the production of the porous particles, and adding the above-mentioned components of the water-repellent agent. For example, by replacing the solvent of the liquid containing the porous particles by water, a water dispersion-type water-repellent agent can be obtained.

### <Applications of the water-repellent agent>

The water-repellent agent can be used as an external treatment agent (surface-treating agent) or an internal treatment agent. The water-repellent agent can be used as a repellent agent (water-repellent agent, oil-repellent agent, water- and oil-repellent agent), a soil resistant agent, a soil release agent, a release agent or a mold release agent.

By treating a substrate with the water-repellent agent, a surface structure is formed in which the porous particles in the water-repellent agent are disposed on the substrate surface. The surface structure has a rugged structure originated from the porous particles.

The surface structure can be formed by applying the water-repellent agent to a treatment target (substrate) by a conventionally well-known method. A usually adopted method involves dispersing and diluting the water-repellent agent in an organic solvent or water and adhering the dispersion on the surface of the treatment target by a well-known method such as spray coating or foam coating, and drying the resultant. As required, alternatively, the particles may be adhered by softening the particles by carrying out a heating treatment. Further, as required, alternatively, the water-repellent agent may be applied together with a suitable cross-linking agent (for example, blocked isocyanate) and curing is carried out. Further, it is also possible for an insect repellent, a softening agent, an antibacterial agent, a flame retarder, an antistatic agent, a coating material fixing agent, a wrinkle-resistant agent and the like to be added to and concurrently used with the water-repellent agent. The concentration of a polymer in the treatment liquid to be brought into contact with the substrate may be 0.01 to 10% by weight (particularly, in the case of dip coating), for example, 0.05 to 10% by weight.

The treatment target to be treated with the water-repellent agent includes textile products, stone, filters (for example, electrostatic filters), dustproof masks, parts of fuel cells (for example, gas diffusion electrodes and gaseous diffusion supports), glass, paper, trees, leather, fur, asbestos, brick, cement, metals and oxides thereof, ceramic products, plastics, painted surfaces and plaster. The textile products include various examples. Examples of fibers thereof include animal and plant natural fibers of cotton, hemp, wool, silk and the like, synthetic fibers of polyamide, polyester, polyvinyl alcohol, polyacrylonitrile, polyvinyl chloride, polypropylene and the like, semi-synthetic fibers of rayon, acetate and the like, inorganic fibers such as glass fibers, carbon fibers and asbestos fibers, and mixed fibers of these.

The water-repellent agent can be used also as an external mold release agent. For example, the surface of the substrate can easily be peeled off another surface (the other surface of the substrate, or the surface of another substrate).

The water-repellent agent can be applied to a fibrous substrate (for example, textile products) by any method known for treating a textile product with a liquid. When the textile product is a fabric, the fabric may be dipped in a solution, or a solution may be adhered or sprayed on the fabric.

The water-repellent agent may be applied to a textile product by a cleaning method, and may be applied to a textile product, for example, in a washing application, a dry cleaning method or the like.

The textile product to be treated is typically a fabric, and this includes woven fabrics, knitted fabrics, nonwoven fabrics, cloths in clothing forms and carpets, but may also be a fiber, yarn or intermediate textile product (for example, sliver, slubbing or the like). A material for the textile product may be natural fibers (for example, cotton fibers, wool fibers or the like), chemical fibers (for example, viscose rayon fibers or lyocell fibers), or synthetic fibers (for example, polyester fibers, polyamide fibers or acrylic fibers), or may be mixtures of these fibers (for example, mixtures of a natural fiber and a synthetic fiber).

Alternatively, the fibrous substrate may be of a leather. In order to make a leather to be hydrophobic and oleophobic, the porous particles may be applied to the leather in various stages in leather processing, for example, during a wet processing of the leather, or during finishing of the leather, from an aqueous solution or an aqueous emulsion.

Alternatively, the fibrous substrate may be a paper. The porous particles may be applied to a paper previously formed, or may be applied to a paper in various stages in paper making, for example, during drying of the paper.

The "treatment" means that the treatment agent is applied to a treatment target by dipping, spraying, coating or the like. The porous particles being an active component of the treatment agent penetrate into the inside of the treatment target and/or adhere on the surface of the treatment target.

Hitherto, embodiments have been described, but it is to be understood that various changes and modifications of forms and details may be made without departing from the gist and the scope of the claims.

### Examples

Hereinafter, the present disclosure will be described in detail by way of Examples, but the present disclosure is not any more limited to these Examples.

### <Test methods>

### [Water-repellency evaluation (contact angle)]

A composition containing porous particles was drop cast on a glass substrate (slide glass, made of soda-lime glass), and heated at 70°C for 60 min to fabricate a substrate having the porous particles adhered thereon. 2 µL of water was dropped on the glass substrate having the porous particles adhered thereon, and the static contact angle at 1 s after water droplet landing was measured and determined by using a fully automatic contact angle meter (DropMaster 701, manufactured by Kyowa Interface Science Co. Ltd.).

### [Water-repellency evaluation (droplet rolling-down test)]

A PET fabric (basis weight: 88 g/m², 70 deniers, gray) was dipped in a water dispersion (particle concentration: 0.1 g/ml) of a composition containing the porous particles, thereafter passed through a mangle, and heated at 70°C for 1 hour to prepare a treated PET fabric; and the PET fabric was fixed on a stage tilted through 30° from the horizontal by a fully automatic contact angle meter (DropMaster 701, manufactured by Kyowa Interface Science Co. Ltd.). 20 µL of water was dropped on the PET fabric from a micro syringe, and it was checked whether the dropped water rolled down. The case where the droplet rolled down was evaluated as O; and the case where the droplet did not move from the dropping place, and the case where the droplet infiltrated into the fabric were evaluated as ×.

### [Example 1]

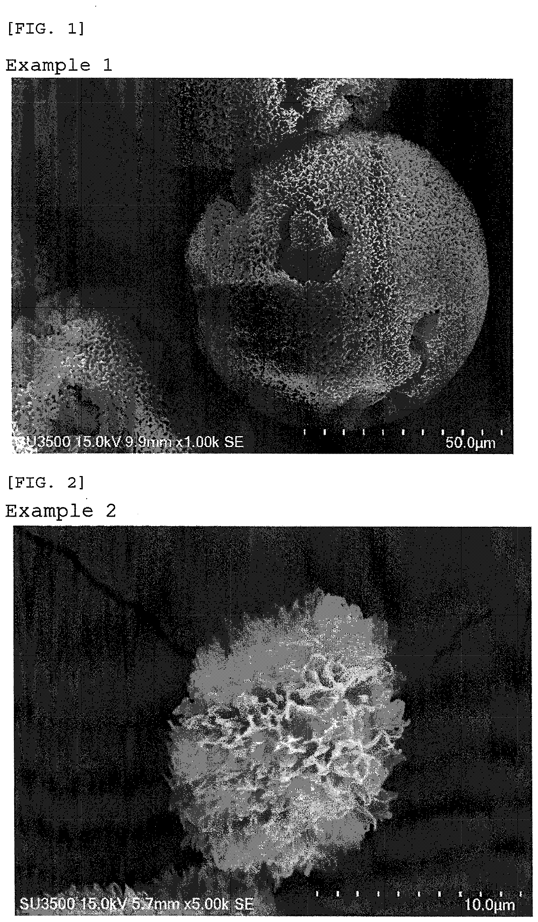

A mixed solvent of 80 parts by mass of 2-butanone and 15 parts by mass of 1,4-dioxane was charged in a polylactic acid (M.W.: 150,000) so that the concentration of the polylactic acid became 100 mg/ml, and stirred at 70°C for 2 hours to be dissolved to thereby obtain a polylactic acid solution. 5 parts by mass of water was charged in the obtained polylactic acid solution, and stirred at 70°C for 10 min; thereafter, the mixed liquid was put in an ice bath and cooled for 2 hours. After the cooling, 30 parts by mass of acetone was added and stirred at 25°C for 1 hour to replace the solvent by water to thereby obtain a water dispersion-type water-repellent agent (particle concentration: 0.2 g/ml). A solid obtained by drying the dispersion was observed by a scanning electron microscope, and the formation of porous particles whose surface was porous was confirmed (see FIG. 1). The porous particles were subjected to the contact angle test and the droplet rolling-down test. The results are shown in Table 1.

### [Example 2]

A water dispersion-type water-repellent agent (particle concentration: 0.2 g/ml) was obtained by the same procedure as in Example 1, except for altering the ratio of 2-butanone, 1,4-dioxane and water to 95/2.5/2.5. A solid obtained by drying the dispersion was observed by a scanning electron microscope, and the formation of porous particles whose surface was porous was confirmed (see FIG. 2). The porous particles were subjected to the contact angle test and the droplet rolling-down test. The results are shown in Table 1.

### [Example 3]

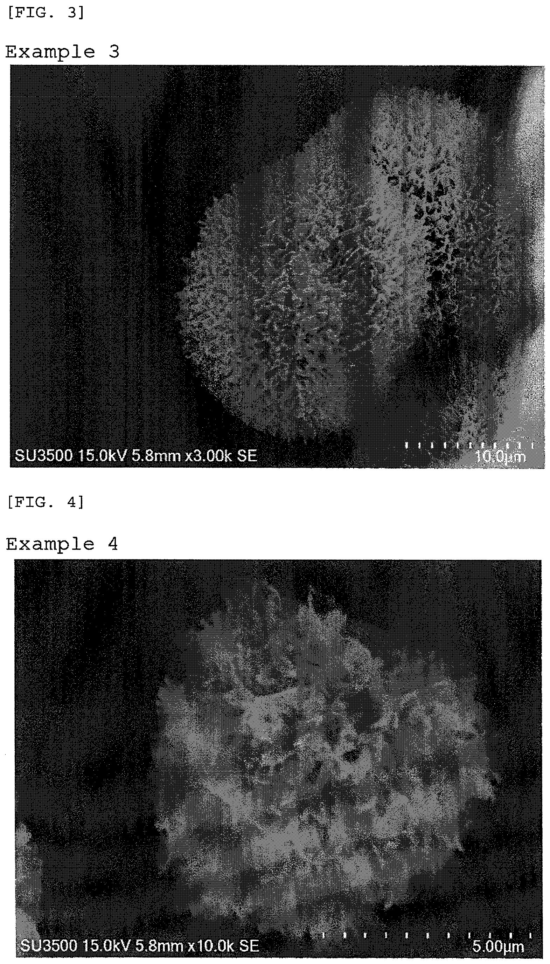

A water dispersion-type water-repellent agent (particle concentration: 0.2 g/ml) was obtained by the same procedure as in Example 1, except for altering the ratio of 2-butanone, 1,4-dioxane and water to 90/5/5. A solid obtained by drying the dispersion was observed by a scanning electron microscope, and the formation of porous particles whose surface was porous was confirmed (see FIG. 3). The porous particles were subjected to the contact angle test and the droplet rolling-down test. The results are shown in Table 1.

### [Example 4]

A water dispersion-type water-repellent agent (particle concentration: 0.2 g/ml) was obtained by the same procedure as in Example 1, except for altering the ratio of 2-butanone, 1,4-dioxane and water to 90/2.5/7.5. A solid obtained by drying the dispersion was observed by a scanning electron microscope, and the formation of porous particles whose surface was porous was confirmed (see FIG. 4). The porous particles were subjected to the contact angle test and the droplet rolling-down test. The results are shown in Table 1.

### [Example 5]

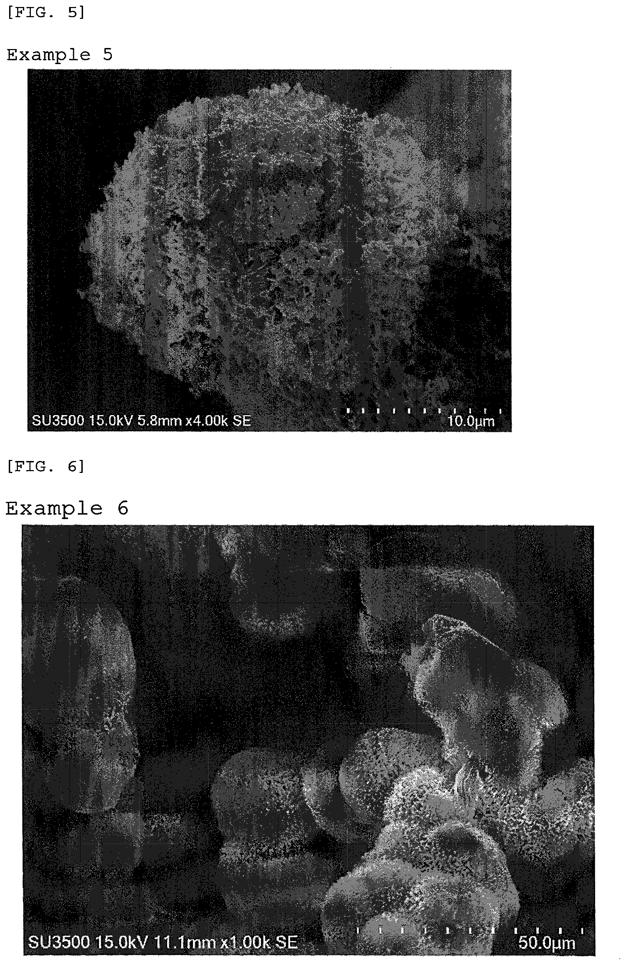

A water dispersion-type water-repellent agent (particle concentration: 0.2 g/ml) was obtained by the same procedure as in Example 1, except for altering the ratio of 2-butanone, 1,4-dioxane and water to 90/7.5/2.5. A solid obtained by drying the dispersion was observed by a scanning electron microscope, and the formation of porous particles whose surface was porous was confirmed (see FIG. 5). The porous particles were subjected to the contact angle test and the droplet rolling-down test. The results are shown in Table 1.

### [Example 6]

A water dispersion-type water-repellent agent (particle concentration: 0.2 g/ml) was obtained by the same procedure as in Example 1, except for altering 1,4-dioxane to 1,3-dioxolane, and altering the ratio of 2-butanone, 1,3-dioxolane and water to 80/15/5. A solid obtained by drying the dispersion was observed by a scanning electron microscope, and the formation of porous particles whose surface was porous was confirmed (see FIG. 6). The porous particles were subjected to the contact angle test and the droplet rolling-down test. The results are shown in Table 1.

### [Example 7]

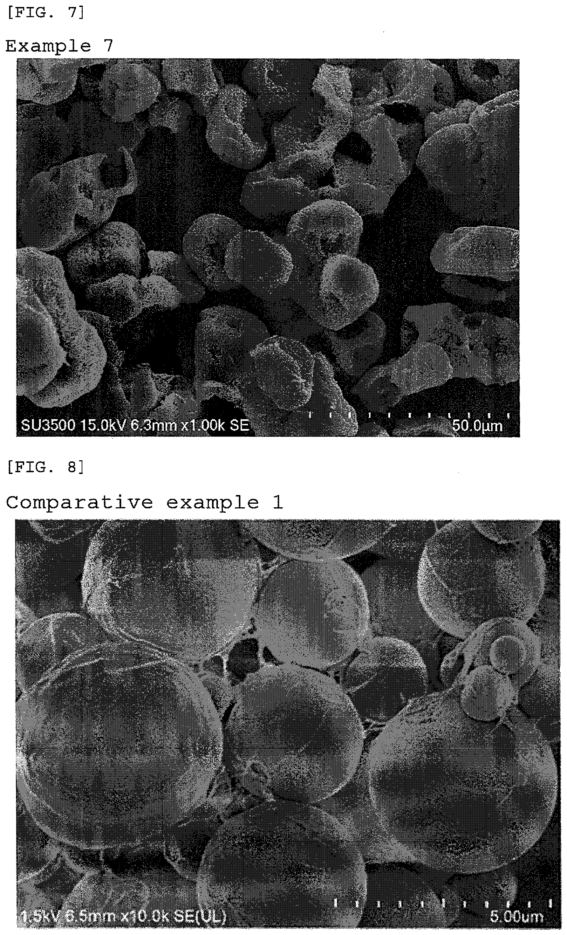

A water dispersion-type water-repellent agent (particle concentration: 0.2 g/ml) was obtained by the same procedure as in Example 1, except for altering 1,4-dioxane to 1,3-dioxolane, and altering the ratio of 2-butanone, 1,3-dioxolane and water to 80/10/10. A solid obtained by drying the dispersion was observed by a scanning electron microscope, and the formation of porous particles whose surface was porous was confirmed (see FIG. 7). The porous particles were subjected to the contact angle test and the droplet rolling-down test. The results are shown in Table 1.

### [Example 8]

3.00 g of stearyl acrylate (StA), 0.149 g of a polyethylene glycol monooleyl ether, 0.020 g of sorbitan tristearate, and 60 ml of pure water were added and emulsified in a nitrogen-substituted reaction container. 25 mg of 2,2'-azobis(2-methylpropionamidine) dihydrochloride was added, and heated and stirred at 65°C for 8 hours to thereby obtain a water dispersion A of PStA. The porous particles obtained in Example 1 and the water dispersion A of PStA, were mixed in 2 : 1, and subjected to the droplet rolling-down test, and rolling-down of the droplet was confirmed.

### [Example 9]

The porous particles obtained in Example 2 and the water dispersion A of PStA in Example 8, were mixed in 2 : 1, and subjected to the droplet rolling-down test, and rolling-down of the droplet was confirmed.

### [Comparative Example 1]

A test fabric was obtained as in the Examples, except for using non-porous polylactic acid particles (PLA particle LANDY PL-1005, manufactured by Miyoshi Oil & Fat Co. Ltd., see FIG. 8) having an average particle size of 5 um in place of the porous particles, and was subjected to the above tests (contact angle test and droplet rolling-down test). The results are shown in Table 1.

### [Comparative Example 2]

A test fabric was obtained as in the Examples, except for using non-porous polylactic acid particles (PLA particle LANDY PL-3000, manufactured by Miyoshi Oil & Fat Co. Ltd.) having an average particle size of 10 µm in place of the porous particles, and was subjected to the above tests (contact angle test and droplet rolling-down test). The results are shown in Table 1.

**[Table 1]**

| | | Example | | | | | | | Comparative Example | |
|---|---|---|---|---|---|---|---|---|---|---|
| | | 1 | 2 | 3 | 4 | 5 | 6 | 7 | 1 | 2 |
| Good solvent | 2-butanone | 80 | 95 | 90 | 90 | 90 | 80 | 80 | - | - |
| | 1,4-dioxane | 15 | 2.5 | 5 | 2.5 | 7.5 | - | - | - | - |
| | 1,3-dioxolane | - | - | - | - | - | 15 | 10 | - | - |
| Poor solvent | water | 5 | 2.5 | 5 | 7.5 | 2.5 | 5 | 10 | - | - |
| Average particle size/µm | | 75.0 | 12.5 | 14.5 | 7.5 | 21.5 | 28.5 | 21.5 | 5.0 | 10 |
| Water-repellency evaluation | Contact angle | 148.5° | 149.5° | 150.5° | 150.4° | 149.9° | 150.1° | 152.4° | 85.9° | 64.5° |
| | Droplet rolling-down test | ○ | ○ | ○ | ○ | ○ | ○ | ○ | × | × |

| | | | | | | | | | | |
|---|---|---|---|---|---|---|---|---|---|---|
| Numerical values for the solvents are in weight ratios | | | | | | | | | | |

## Claims

1. A water-repellent agent comprising a porous particle containing a biodegradable polyester as a main component.

2. The water-repellent agent according to claim 1, wherein the biodegradable polyester is an aliphatic polyester.

3. The water-repellent agent according to claim 1 or 2, wherein the biodegradable polyester is at least one resin selected from the group consisting of polylactic acid, polyalkylene succinate, polyhydroxyalkanoate and polylactone.

4. The water-repellent agent according to any one of claims 1 to 3, wherein the porous particle has a particle size of 0.1 µm to 500 µm.

5. The water-repellent agent according to any one of claims 1 to 4, comprising an aqueous medium.

6. A method for producing a water-repellent agent comprising a porous particle containing a biodegradable polyester as a main component, the method comprising: a dissolution step of dissolving the biodegradable polyester in a good solvent thereof to obtain a good solvent solution;
a poor solvent addition step of adding a poor solvent of the biodegradable polyester to the good solvent solution to obtain a poor solvent-containing liquid; and
a porous particle formation step of forming the porous particle in the poor solvent-containing liquid.

7. The method for producing a water-repellent agent according to claim 6, wherein the good solvent comprises an ether solvent and a ketone solvent.

8. The method for producing a water-repellent agent according to claim 7, wherein a weight ratio of the ether solvent/the ketone solvent is 0.01 to 0.3.

9. The method for producing a water-repellent agent according to any one of claims 6 to 8, wherein in the dissolution step, the biodegradable polyester is dissolved under heating in the good solvent, and
in the porous particle formation step, the poor solvent-containing liquid is cooled down to 20°C or lower.

10. The method for producing a water-repellent agent according to any one of claims 6 to 9, comprising a solvent post-addition-holding step of, after the porous particle formation step, adding a post-addition solvent selected from polar solvents having a Rohrschneider's polarity parameter in the range of 3.5 to 11 to the poor solvent-containing liquid, and holding the resultant.

11. A textile product, having porous particles containing a biodegradable polyester as a main component adhered on the textile product.
